# EUROPEAN PATENT APPLICATION

(11) **EP 4 674 616 A1**
(43) Date of publication of application: **07.01.2026**
(21) Application number: 24382711.0
(22) Date of filing: 02.07.2024
(51) Int. Cl.: B32B 7/06, B32B 7/12, B32B 27/08, B32B 27/30, B32B 27/32, B32B 27/34, B32B 37/15, B32B 38/10

(54) **A PROCESS FOR MAKING TWO FILMS FROM A SINGLE FILM**

(71) Applicant: Dow Global Technologies LLC, Midland, MI 48674 (US)
(72) Inventor: SAHU, Nrusingh, 43006 Tarragona (ES); HELGERT, Anna, 43006 Tarragona (ES); MUÑOZ EXPOSITO, David, 43006 Tarragona (ES)
(74) Representative: Boult Wade Tennant LLP

(57) **Abstract**

A process of making films is disclosed herein. The two or more films can be made by: extruding a source film comprises at least two layers that have low adhesion to each other and which are directly in contact with each other; separating the source film at the interface between the adhesion layers to make two separate continuous films, referred to as "product films"; and recovering for use or directly using the product films. The adhesion layers can be thin and form continuous thin surface layers on the product films.

## Description

### FIELD

Embodiments described herein generally relate to a process for making two polymer films from a single film.

### INTRODUCTION

A great demand exists for the reduction of material usage as well as material waste without an impact on quality. As a result, companies are faced with pressure from society, industry, and governments to maintain performance of materials while simultaneously reducing the amount of materials and material waste. This can be a difficult dance to balance in today's ever-evolving and ever-changing landscape. A key component in this circle of material life are multilayer films. They impact the way in which materials are moved, preserved, and contained. Their configuration also directly impacts material waste and usage because they can downgauged, made from recycled materials, or made from materials that can more easily recyclable. Multilayer films therefore are a crucial consideration to shaping sustainability.

Films can include layers of different polymer compositions. The layers can be formed via extruding the polymer compositions, and the films can then be stretched by drawing the film (drawn-film extrusion) or by forcing the film to pass over a bubble of air (blown film extrusion) to make it thinner. Each layer of a film may be selected to provide different properties. For example, a barrier layer can reduce transmission of water, oxygen, and/or components through the film; a heat seal layer on one face of the film can improve the speed and strength of forming heat seal packaging with the film; and a print layer can provide a surface for printing on the film. By combining, removing, or thinning film layers, goals on sustainability and circularity may be in closer reach. However, there are practical limits to the ability to reduce use of materials in films or recyclable films, including limits on the thinness of layers. In particular, extruded layers on the face of films are in contact with the extrusion die and equipment for longer, so they experience more heat and more friction. The heat may cause a thin surface layer to degrade, and the friction pulls uneven bare spots into a thin surface layer, where the surface layer is too thin to perform its function.

Accordingly, new processes are needed that can effectively put thin polymer layers on the face of multilayer films while avoiding problems such as the problems from exposure to the extrusion equipment.

### SUMMARY

Disclosed herein is a process for making two polymer films from a single film. The process comprises (a) extruding polymers to form a source film comprising at least two layers, a first adhesion layer and a second adhesion layer, wherein the first adhesion layer and the second adhesion layer are in direct contact; (b) separating the source film at the interface between the first adhesion layer and the second adhesion layer to form a first product film and a second product film. The process can make at least two product films from extrusion of a single source film. The source film extrusion can be performed on an ordinary extrusion line without modifications. The adhesion layers can be sandwiched between two or more thicker layers, so that the low-adhesion layers can be thin but have little or no contact with the extrusion equipment after they are formed. After separation, the thin low adhesion layers will become thin surface layers on the product films.

### DETAILED DESCRIPTION

The process disclosed herein comprises extruding polymers to form a source film comprising at least two layers, a first adhesion layer and a second adhesion layer, wherein the first adhesion layer and the second adhesion layer are in direct contact; and separating the source film at the interface between the first adhesion layer and the second adhesion layer for form a first product film and a second film. Accordingly, two films can be made from a single source film. Suitable coextrusion processes for multilayer films are well known and can be used for this process. Suitable extruders and extrusion dies are commercially available with instructions for their use.

The source film comprises at least two polymer layers, a first adhesion layer and a second adhesion layer. In some embodiments, the source film comprises at least three polymer layers or at least four polymer layers or at least five polymer layers or at least seven polymer layers. There is no maximum limit on the layers that the source film can have, but in some embodiments, the source film comprises no more than 25 layers, or no more than 20 layers, or no more than 15 layers, or no more than 12 layers, or no more than 10 layers, or no more than 9 layers. The two layers on the outer faces of this film are called "surface layers." The layers between the surface layers are called "internal layers" herein.

Examples of polymers that may independently be included in each layer are described include polyethylenes, such as high density polyethylene (HDPE), medium density polyethylene (MDPE), linear low density polyethylene (LLDPE), and low density polyethylene (LDPE), as well as functional polymers, and polypropylene. In some embodiments, one or more layers of the source film comprises polyethylene. In some embodiments, one or more layers of the source film comprises polypropylene. In some embodiments, one or more layers of the source film comprises ethylene-vinyl alcohol (EVOH). In some embodiments, one or more layers of the source film comprises polyamide such as nylon. In some embodiments, one or more layers of the source film comprises ethylene-vinyl acetate (EVA).

In some embodiments, one or more layers of the source film consists essentially of a single polymer. In some embodiments, one or more layers of the source film comprises a polymer blend comprising two or more polymers. It is known how to select compatible polymers for polymer blends, or how to add compatibilizer to make blends from otherwise incompatible polymers. Examples of common polymer blends include blends of polyolefins, such as blending high density polyethylene (HDPE) or linear low-density polyethylene (LLDPE) with low density polyethylene (LDPE) or with polyethylene elastomers.

In some embodiments, one or more layers of the source film are tie layers. Examples of tie layers that bind polyolefin layers to non-polyolefin layers include polyolefins that have been functionalized with pendant polar moieties, such as pendant acid or anhydride moieties. For example, copolymers of ethylene with maleic acid and optionally acrylate monomers are sometimes used as tie layers. Suitable tie layer polymers are known and commercially available, such as under the AMPLIFY^{™} and BYNEL^{™} trademarks. In some embodiments, the tie layer comprises a polymer blend, such as a blend of polyolefin and a functionalized polyolefin.

The source film comprises at least two layers, a first adhesion layer and a second adhesion layer. The first adhesion layer and the second adhesion layer can have low adhesion. "Low adhesion" means that the adhesion layers have an adhesion strength of less than 3.0 N/15 mm and can be easily separated, such as by peeling apart, to form two separate continuous films, a first product film and a second product film. There is no tie layer or other layer between the first adhesion layer and the second adhesion layer.

The term in "direct contact" means that a face of the first adhesion layer is in contact with a face of the second adhesion layer, without a tie layer or other layer between them.

In some embodiments, the adhesive strength between the first adhesion layer and the second adhesion layer (under conditions used to separate the source film) is lower than the tear strength of the first product film and/or second product film. In some embodiments, the adhesive strength between the first adhesion layer and second adhesion layer (as measured by the peel test in the Test Methods under conditions used to separate the source film) is no more than 90 percent of the Elmendorf tear strength (as measured by the test in the Test Methods under conditions used to separate the source film), or no more than 80 percent, or no more than 70 percent, or no more than 60 percent, or no more than 50 percent. In some embodiments, the adhesive strength between the first adhesion layer and the second adhesion layer (as measured by the peel test in the Test Methods) is at least 0.01 percent of the Elmendorf tear strength (as measured by the test in the Test Methods). Tear strength can vary depending on the content and thickness of the product films, and so the required adhesive strength can also vary depending on these parameters.

In some embodiments, the adhesion between the first adhesion layer and the second adhesion layer under conditions in step (b) (separation step) is no more than 2.0 N/15 mm, or no more than 1.5 N/15 mm, or no more than 1.0 N/15 mm, or no more than 0.8 N/15 mm, or no more than 0.5 N/15mm, or no more than 0.3 N/15mm, or no more than 0.1 N/15mm.

The terms "first" and "second" in their use of "first adhesion layer" and "second adhesion layer" are simply used to note two different layers and the sequence or order of the layers in the source film (i.e., first adhesion layer and then second adhesion layer) is not of particular limitation. In some embodiments, the first adhesion layer comprises or consists of polyethylene, and the second adhesion layer comprises or consists of polypropylene. In some embodiments, the first adhesion layer that comprises polyolefin is in direct contract with the second adhesion layer that comprises a non-polyolefin polymer having regular dipolar moieties, such as hydroxyl, halide, acid, ester, amine or amide moieties. In some embodiments, the first adhesion layer comprises a polyamide or polyamide terpolymer or copolyimide, and the second adhesion layer comprises linear low density polyethylene and/or low density polyethylene. In some embodiments, the first adhesion layer comprises polyethylene and the second adhesion layer comprises EVOH.

In some embodiments, the first or second adhesion layer comprises polyethylene or consist essentially of polyethylene. In some embodiments, the first or second adhesion layer comprises high density polyethylene or consists essentially of high density polyethylene. In some embodiments, the first or second adhesion layer comprises low density polyethylene. In some embodiments, the first or second adhesion layer comprises linear low density polyethylene. Suitable polyolefins are commercially available, such as under the DOW^{™}, DOWLEX^{™}, UNIPOL^{™}, CEFOR^{™}, ATTANE^{™} and ELITE^{™} trademarks, and are exemplified in the examples section below. Others can be made by known processes, such as polymerization of ethylene and/or propylene, optionally with α-olefin comonomers such as 1-butene, 1-hexene or 1-octene, in the presence of a catalysts such as a Ziegler-Natta catalyst of a metallocene catalyst. In some embodiments, the first or second adhesion layer comprises polypropylene. It is generally understood that the first adhesion layer comprises a polymer or polymers that are not-compatible with or do not adhere strongly with a polymer or polymers that are in the second adhesion layer as demonstrated in the examples section below.

In some embodiments, the non-polyolefin low adhesion layer comprises primarily EVOH. In some embodiments, the first or second adhesion layer is a non-polyolefin adhesion layer comprising nylon. In some embodiments, the first or second adhesion layer is a non-polyolefin adhesion layer comprising polyvinylidene chloride. In some embodiments, the first or second adhesion layer is a non-polyolefin adhesion layer comprising polycarbonate. It is generally understood that where, for example, the first adhesion layer comprises a non-polyolefin such as nylon, polyvinylidene chloride, or polycarbonate, the second adhesion layer comprises a polyolefin such as polyethylene. Suitable non-polyolefin polymers for this type of layer are commercially available, such as under the Eval, Soarnol, Ultramid, Technylstar, Mylar and Saran trademarks. Others can be made by known processes.

In some embodiments, the adhesion layers comprise as noted below. The term "primarily" as used herein means the layer comprises at least 75 wt.%, based on the total weight of the layer.
- A first adhesion layer that comprises primarily polyethylene and a second adhesion layer that comprises primarily polypropylene homopolymer; or
- A first adhesion layer that comprises primarily polyethylene and a second adhesion layer that comprises primarily polypropylene random copolymer; or
- A first adhesion layer that comprises primarily LLDPE and a second adhesion layer that comprises primarily EVOH; or
- A first adhesion layer that comprises primarily LLDPE and a second adhesion layer that comprises primarily nylon; or
- A first adhesion layer that comprises primarily HDPE and a second adhesion layer that comprises primarily EVOH; or
- A first adhesion layer that comprises primarily HDPE and a second adhesion layer that comprises primarily nylon; or
- A first adhesion layer that comprises primarily LDPE and a second adhesion layer that comprises primarily EVOH; or
- A first adhesion layer that comprises primarily LDPE and a second adhesion layer that comprises primarily nylon; or
- A first adhesion layer that comprises primarily polypropylene and a second adhesion layer that comprises primarily EVOH; or
- A first adhesion layer that comprises primarily polypropylene and a second adhesion layer that comprises primarily nylon.

In some embodiments, the source film is a two-layer film, and both adhesion layers are surface layers. In some embodiments, the source film comprises at least three layers, and one adhesion layer is a surface layer while the other low adhesion layer is an internal layer. In some embodiments, the source film comprises at least four layers, and both adhesion layers are internal layers. In some embodiments, the first adhesion layer is an internal layer and the first adhesion layer is in contact with the second adhesion layer and the opposite side of the first adhesion layer is adhered directly or indirectly to one or more other polymer layers.

For example, in a source film wherein the adhesion layers are (1) a barrier layer that comprises primarily EVOH or nylon and (2) a first polyolefin layer directly in contact with the barrier layer:
- The barrier layer may be adhered directly to a tie layer, and indirectly by the tie layer to a second polyolefin layer on the opposite face from the first polyolefin layer; and/or
- The first polyolefin adhesion layer may be a surface layer or may be adhered to a third polyolefin layer, with or without a tie layer, on the opposite face from the barrier layer.

Examples of source films include:
- A film comprising the following layers: a first polyolefin surface layer / a tie layer / an internal non-polyolefin barrier layer / a second polyolefin surface layer. In this example, the internal polyolefin barrier layer and the second polyolefin surface layer are the first and second adhesion layers. When the source film is split, the first product film will contain the first polyolefin surface layer / the tie layer / the internal non-polyolefin barrier layer (which is a surface layer in the product film), and the second product film will be a monolayer film of the second polyolefin surface layer.
- A film comprising the following layers: first polyolefin surface layer / a tie layer / an internal non-polyolefin barrier layer / an internal polyolefin layer / optionally a second tie layer / a second polymer surface layer. In this example, the internal polyolefin barrier layer and the internal polyolefin layer are the first and second adhesion layers. When the source film is split, the first product film will contain the first polyolefin surface layer / the tie layer / the internal non-polyolefin barrier layer (which is a surface layer in the product film), and the second product film will be contain an internal polyolefin layer (which is a surface layer in the product film)/ optionally the second tie layer / the second polymer surface layer.

In some embodiments, a source film comprises (1) a first adhesion layer that comprises an oxygen barrier polymer such as EVOH, PVDC or polyamide, in contact with (2) a second adhesion layer that comprises a heat seal polymer, such as polyethylene, polyethylene elastomer or EVA. The barrier polymer layer can be adhered by a tie layer to a first polyolefin layer that provides specific properties including structural strength. The heat seal layer is adhered directly or by a tie layer to a second polyolefin layer that provides structural strength. In this example, the layers include: polyolefin layer / tie layer / non-polyolefin barrier layer / heat-seal layer / optionally tie layer / polyolefin layer. Both adhesion layers are protected from heat and shear in the die by the polyolefin layers, so the adhesion layers may be thin (e.g., less than less than 20 µm (or microns), or less than 15 µm, or less than 10 µm). When the source film is separated, the first product film can have a surface layer of barrier polymer adhered to a polyolefin structural layer, and the second product film can have a surface layer of heat seal polymer adhered to a polyolefin structural layer.

In some embodiments, the first adhesion layer or the second adhesion layer or both the first and second adhesion layers are no more than 20 microns thick, or no more than 15 microns thick, or no more than 10 microns thick, or no more than 8 microns thick, or no more than 6 microns thick, or no more than 4 microns thick. In some embodiments, the first adhesion layer, second adhesion layer, or both are at least 1 microns thick, or at least 2 microns thick, or at least 3 microns thick, or at least 4 microns thick, or at least 5 microns thick. In some embodiments, the adhesion layers that meet these limits are internal layers.

In some embodiments, the first adhesion layer in a source film can be thicker than the second adhesion layer. In some embodiments, the first adhesion layer or the second adhesion layer is a surface layer in a source film and is at least 10 microns thick, or at least 12 microns, or at least 15 microns, or at least 18 microns, or at least 20 microns, or at least 22 microns, or at least 24 microns. In some embodiments, the first adhesion layer or the second adhesion layer is a surface layer in a source film and is at most 100 microns thick or at most 75 microns or at most 50 microns or at most 30 microns or at most 25 microns.

In some embodiments, the adhesion layers are adhered directly or indirectly to a structural layer that is thicker than the adhesion layer. In some embodiments, the structural layer is at least 8 microns thick, or at least 10 microns thick, or at least 12 microns, or at least 14 microns, or at least 16 microns, or at least 18 microns, or at least 20 microns. In some embodiments, the structural layer is at most 100 microns or at most 80 microns or at most 60 microns or at most 50 microns or at most 40 microns or at most 30 microns or at most 20 microns. In some embodiments, the structural layer is at least 2 times the thickness of the first adhesion layer or second adhesion layer, or at least 3 times, or at least 4 times, or at least 5 times, or at least 6 times, or at least 7 times, or at least 8 times, or at least 9 times, or at least 10 times. In some embodiments, the structural layer is at most 50 times the thickness of the first or second adhesion layer, or at most 40 times, or at most 30 times, or at most 25 times, or at most 20 times.

In some embodiments, layers that comprise primarily polyolefin make up at least 70 percent of the thickness of the source film, or at least 80 percent, or at least 85 percent, or at least 90 percent, or at least 92 percent, or at least 95 percent, based on the total thickness of the source film. In some embodiments, layers that comprise polyolefin make up at most 99 percent of the thickness of the source film, or at most 98 percent, or at most 97 percent, or at most 96 percent, or at most 95 percent, based on the total thickness of the source film. In some embodiments, layers that comprise primarily non-polyolefin polymer make up at least 1 percent of the thickness of the source film, or at least 2 percent, or at least 3 percent, or at least 4 percent, based of the total thickness of the source film. In some embodiments, layers that comprise primarily non-polyolefin polymer make up at most 30 percent of the thickness of the source film, or at most 20 percent or at most 15 percent or at most 10 percent or at most 8 percent or at most 5 percent. For example, in a source film that comprises one or more layers comprising primarily polyolefin polymer and one or more layers comprising primarily a non-polyolefin polymer, the ratio of the thickness of polyolefin layers to non-polyolefin layers can be from 80/20 to 97/3, or from 90/10 to 96/4, or from 92/8 to 96/4, or from 92/8 to 95/5.

In some embodiments, the source film is on average at least 20 microns thick, or at least 25 microns thick, or at least 30 microns thick, or at least 35 microns thick, or at least 40 microns thick, or at least 45 microns thick, or at least 50 microns thick. In some embodiments, the source film is on average at most 500 microns thick or at most 400 microns thick or at most 300 microns thick or at most 250 microns or at most 200 microns or at most 150 microns or at most 125 microns or at most 100 microns.

In some embodiments, one or more layers of the source film may comprise additives. Examples of additives used in films are antimicrobial agents, antioxidants, catalyst neutralizers, colorants, and light stabilizers. In some embodiments, these additives may be approved for food contact.

The source film can be unoriented, uniaxially oriented, or biaxially oriented. A uniaxially oriented source film may be oriented in the direction of extrusion (machine direction or MD), alternatively in the direction transverse to the direction of extrusion (transverse direction or TD). In some embodiments, the source film is produced by blown film extrusion and is biaxially oriented. In some embodiments, the source film is produced by cast film extrusion and is uniaxially oriented.

The source film is separated at the interface between the adhesion layers to produce two or more product films. In some embodiments, the separation is accomplished by physical separation, such as by peeling. In some embodiments, the source film may be heated to assist separation. For example, each outer surface layer of the source film may be adhered to one of two opposing drums, which turn and peel the source film apart into two product films. In some embodiments, the source film is heated before peeling to make peeling easier. In some embodiments, one or both heated product films are cooled after the product films are peeled apart and before the product film is layered onto the drum, to reduce the product film(s) blocking on the drum.

The result of the separation step is two or more product films that reflect the components and layers of the source film. Each product film comprises one of the adhesion layers of the source film as a surface layer, plus the other layers adhered to that adhesion layer. For example:
- A source film comprising the following layers: first polyolefin layer / tie layer / non-polyolefin barrier layer / second polyolefin layer, may be separated into:
   ∘ A first product film comprising the following layers: first polyolefin layer / tie layer / non-polyolefin barrier layer; and
   ∘ A second product film that is a monolayer film comprising the second polyolefin layer.
- A source film comprising the following layers: first polyolefin layer / tie layer / non-polyolefin barrier layer / second polyolefin layer / third polyolefin layer, may be separated into:
   ∘ A first product film comprising the following layers: first polyolefin layer / tie layer / non-polyolefin barrier layer; and
   ∘ A second product film comprising the following layers: second polyolefin layer / third polyolefin layer.
- A source film comprising the following layers: first polyolefin layer / first tie layer / non-polyolefin barrier layer / second polyolefin layer / second tie layer / polymer layer, may be separated into:
   ∘ A first product film comprising the following layers: first polyolefin layer / first tie layer / non-polyolefin barrier layer; and
   ∘ A second product film comprising the following layers: second polyolefin layer / second tie layer / polymer layer.
   The "polymer" layer may comprise polyolefin or non-polyolefin polymers. Alternatively, the source film may comprise two or more interfaces between the adhesion layers and may be separated into three or more product films. For example, the source film may comprise two different pairs of adhesion layers or the source film may comprise three adjacent layers in which the center layer has lower adhesion with both layers in contact with it. In the case of a three layer structure, the central layer may have thickness as previously discussed for surface adhesion layers. For example, a source film comprising the following layers: first polyolefin layer / first tie layer / first non-polyolefin low adhesion layer / second polyolefin low adhesion layer / second (non-polyolefin) adhesion layer / second tie layer / third polyolefin layer, may be separated into:
- A first product film comprising the following layers: first polyolefin layer / first tie layer / first (non-polyolefin) adhesion layer; and
- A second product film which is a monolayer film comprising the second (polyolefin) adhesion layer; and
- A third product film comprising the following layers: third polyolefin layer / second tie layer / second (non-polyolefin) adhesion layer.

In some embodiments, the second polyolefin adhesion layer (and by the second product film) is at least 10 microns thick or at least 12 microns thick or at least or at least 15 microns thick or at least 18 microns thick or at least 20 microns thick.

In some embodiments, the first and second product films have an average thickness of at most 300 microns, or at most 250 microns, or at most 200 microns, or at most 150 microns, or at most 100 microns, or at most 80 microns, or at most 60 microns, or at most 50 microns, or at most 40 microns, or at most 30 microns, or at most 20 microns. In some embodiments, the first and second product films have an average thickness of at least 10 microns, or at least 12 microns, or at least 15 microns, or at least 17 microns, or at least 20 microns, or at least 22 microns, or at least 25 microns.

In some embodiments, first product film has a surface layer comprising non-polyolefin barrier polymer and at least one layer comprising polyolefin, and the polyolefin layers make up at least 70 percent of the thickness of the product film, or at least 80 percent, or at least 90 percent, or at least 92 percent, and at most 99 percent of the thickness of the film, or at most 98 percent, or at most 97 percent, or at most 96 percent, or at most 95 percent.

The product films can be recovered for use or are directly used. In some embodiments, the product films are stored, such as by winding on a roller, drum or core or cutting into sheets and stacking. In some embodiments, the product films may be further treated, such as by orienting, laminating, metallizing, printing, cross-linking, or irradiating. In some embodiments, the recovered product films have a length in the machine direction of at least 10 meters, or at least 25 meters, or at least 50 meters, or at least 100 meters.

The product films may be used for ordinary purposes of multilayer films such as packaging and wraps.

In an embodiment of directly using a product film, the source film is extruded as an extrusion coating on a substrate. A product film may be separated from the source film and recovered for use as previously described, and a product film may remain as a coating on the substrate. Examples of substrates include metal, wood and ceramic.

### Illustrative Embodiments

The following embodiments illustrate some aspects of the invention:
Aspect 1. A process for making two polymer films from a single film, the process comprising:
   (a) extruding polymers to form a source film comprising at least two layers, a first adhesion layer and a second adhesion layer, wherein the first adhesion layer and the second adhesion layer are in direct contact; and
   (b) separating the source film at the interface between the first adhesion layer and the second adhesion layer to form a first product film and a second product film.
Aspect 2. The process of Aspect 1, wherein the adhesion strength between the first adhesion layer and the second adhesion layer of the source film is no more than 2.0 N/15 mm when separating the source film during step (b).
Aspect 3. The process of Aspect 1, wherein the adhesion strength between the first adhesion layer and the second adhesion layer of the source film is no more than 0.8 N/15 mm when separating the source film during step (b).
Aspect 4. The process of Aspect 1, wherein the first adhesion layer comprises a polyethylene, and the second adhesion layer comprises a polypropylene homopolymer or random copolymer.
Aspect 5. The process of Aspect 1, wherein the first adhesion layer comprises polyolefin, and the second adhesion layer comprises a polymer having dipolar moieties selected from the group of hydroxyl, halide, acid, ester, amine, or amide moieties.
Aspect 6. The process of Aspect 1, wherein the first adhesion layer comprises a polyolefin, and the second adhesion layer comprises a non-polyolefin polymer selected from ethylene vinyl alcohol copolymer, polyamide or polycarbonate.
Aspect 7. The process of any one of Aspects 1, wherein at least one of the first or second adhesion layers is an internal layer of the source film, and the first product film and the second product film have a length of at least 25 meters in the machine direction.
Aspect 8. The process of Aspect 7, wherein the internal layer is from 1 micron to 10 microns thick.
Aspect 9. The process of Aspect 7, wherein the internal layer is adhered directly or indirectly to a supporting layer that is at least three times thicker than the internal layer.
Aspect 10. The process of Aspect 7, wherein the first adhesion layer and the second adhesion layer are internal layers of the source film.
Aspect 11. The process of Aspect 10, wherein the first adhesion layer or the second adhesion layer is from 1 micron to 10 microns thick.
Aspect 12. The process of Aspect 10, wherein the first adhesion layer or the second adhesion layer is adhered directly or indirectly to a supporting layer that is at least three times thicker than the first or second adhesion layer.
Aspect 13. The process of Aspect 7, wherein layers comprising polyolefins make up from 93 to 98 percent of the thickness of the source film and layers void of polyolefins make up from 2 to 7 percent of the thickness of the source film, based on the total thickness of the source film.
Aspect 14. The process of Aspect 7, wherein the source film comprises two or more interfaces between the first adhesion layer and second adhesion layer and is separated into three or more product films.
Aspect 15. The process of Aspect 1, wherein
   (a) the source film is extruded as an extrusion coating on a substrate; and
   (b) the first product film is separated from the second product film and the substrate; and
   (c) the second product film is a coating on the substrate.

### Test Methods

Unless stated otherwise, measurements listed in this application are made using the following test methods:

| Parameter | Test |
|---|---|
| Peel strength | T Peel Test according to ASTM D903- Standard Test Method for Peel or Stripping Strength of Adhesive Bonds |
| Thickness | ASTM F2251-standard method to determine the thickness of flexible packaging materials. It's an ASTM standard that requires the use of digital micrometers for precision testing of various flexible packaging products, including plastic films. |
| Elmendorf Tear | ASTM D1922 - Standard Test Method for Propagation Tear Resistance of Plastic Film and Thin Sheeting by Pendulum Method |
| Dart Impact | ISO 7765-1 - Determination of impact resistance by the free falling dart method |
| Oxygen Transmission | ASTM D3985 - Standard Test Method for Oxygen Gas Transmission Rate Through Plastic Film and Sheeting Using a Coulometric Sensor |
| Seal Strength | ASTM F88 - Standard Test Method for Seal Strength of Flexible Barrier Materials |

### Examples

The following examples illustrate specific embodiments of the invention, but do not limit the broadest scope of the invention.

The materials in Table 1 are used for the Examples:

**Table 1**

| **Name** | **Description** |
|---|---|
| | Polyethylene Resin |
| CEFOR 1210P | CEFOR^{™} 1210P linear low density polyethylene (Density 0.919 g/cc) |
| DLDPE 310E | DOW^{™} LDPE 310E low density polyethylene (Density 0.923 g/cc) |
| DLDPE 312E | DOW^{™} LDPE 312E low density polyethylene (Density 0.923 g/cc) |
| DOWLEX 2645G | DOWLEX^{™} 2645G polyethylene (Density 0.919 g/cc) |
| ELITE 5401G | ELITE^{™} G enhanced polyethylene copolymer (Density 0.918 g/cc) |
| ELITE 5401GT | ELITE^{™} GT enhanced polyethylene copolymer (Density 0.917 g/cc) |
| ELITE AT6900 | ELITE^{™} AT6900 enhanced polyethylene (Density 0.969 g/cc) |
| Anteo FK1828 | Anteo FK1828 terpolymer LLDPE (Density 0.918 g/cc) |
| Enable 2005 | Enable 2005 ethylene 1-hexene copolymer (Density 0.920 g/cc) |
| PE FM1810 | Borouge FM1810 LLDPE (Density 0.918 g/cc) |
| | |
| | Other Non-adhesive Resins |
| Eval F171B | Eval F171B ethylene vinyl alcohol copolymer |
| Nylon 6434B | Ube Terpalex 6434B polyamide terpolymer (low crystalline) |
| Ultramid C33 | Ultramid C33 copolyamide (high crystalline) |
| Radilon CS38 | Radilon CS38TXNW 6/66 copolyamide |
| | |
| | Adhesive resins |
| BYNEL 41E687 | BYNEL^{™} 41E687 adhesive resin (Density 0.91 g/cc) |
| Admer NF498E | Admer NF498E maleic anhydride grafted LLDPE-based adhesive |
| Admer NF642E | Admer NF642E maleic anhydride grafted LLDPE-based adhesive |
| PPA | Polymer processing aid - Fluoropolymer friction-reducing additive |

### Examples 1-3:

The polymers and polymer blends listed in Examples 1, 2 and 3 below are coextruded to make 7-layer source films on a Windmüller and Hölscher blown-film extrusion line with a seven-layer, 500 mm diameter extrusion die. Exit temperature at the extruder for each polymer is 200°C, except the exit temperature for nylon is 235°C. The extrusion die temperature is 230°C to 235°C. The blow-up ratio is 3.31. The resulting source film is taken up on a 2600 mm winder.

Each source film is separated into two product films as follows: A Prodoing commercial slitter machine having a width of 1200 mm has one rewinder shaft and two opposing winder shafts. No slitter blade is used. The source film is loaded onto the rewinder shaft. The outside end of the source film is separated into two product films by hand-peeling the two product films between layers 3 and 4 to start the separation. The product films are attached to the faces of opposing winder shafts with adhesive tape. When the slitter machine runs, it peels the two product films apart and winds them onto separate winder shafts.

In all examples below, all percentages are weight percentages unless otherwise indicated.

### Example 1: The following resins are coextruded to make a 7-layer source film having a total thickness of 78 µm.

| Layer | Content (Wt. Percent) | Thickness (µm) |
|---|---|---|
| 1 | PE: 29% Anteo FK1828+30% Enable 2005ME+40% DLDPE 312E+1% PPA | 16 |
| 2 | PE: 60% CEFOR 1210P + 40% DLDPE 312E | 15.5 |
| 3 | PE: 75% Anteo FK1828 + 25% DLDPE 312E | 5 |
| 4 | Nylon: 100% Ultramid C33 | 5 |
| 5 | Tie: 100% Admer NF498E | 5 |
| 6 | PE: 60% Enable 2005ME + 40% DLDPE 312E | 15.5 |
| 7 | PE: 79% ELITE 5401G + 20% DLDPE 312E + 1% PPA | 16 |

The source film is separated between Layer 3 and Layer 4, to make:
- a 3-layer product film comprising layers 1, 2 and 3 that is 36.5 µm thick, and
- a 4-layer product film comprising layers 4, 5, 6 and 7 that is 41.5 µm thick.

It is observed that the source film peels apart easily, but the 4-layer product film curls significantly, so that it cannot easily be further processed. We hypothesize, without intending to be bound, that the selected nylon causes curling because of its high level crystallinity.

### Example 2: The following resins are coextruded to make a 7-layer source film having a total thickness of 78 µm.

| Layer | Content (Wt. Percent) | Thickness (µm) |
|---|---|---|
| 1 | PE: 29% Anteo FK1828+30% Enable 2005ME+40% DLDPE 312E+1% PPA | 16 |
| 2 | PE: 60% CEFOR 1210P + 40% DLDPE 312E | 15.5 |
| 3 | PE: 75%b Anteo FK1828 + 25% DLDPE 312E | 5 |
| 4 | Nylon: 100% Nylon 6434B | 5 |
| 5 | Tie: 100% Admer NF498E | 5 |
| 6 | PE: 60% Enable 2005ME + 40% DLDPE 312E | 15.5 |
| 7 | PE: 79% ELITE 5401G + 20% DLDPE 312E + 1% PPA | 16 |

The source film is separated between Layer 3 and Layer 4, to make:
- a 3-layer product film comprising layers 1, 2 and 3 that is 36.5 µm thick, and
- a 4-layer product film comprising layers 4, 5, 6 and 7 that is 41.5 µm thick.

It is observed that the source film peels apart easily, but the 4-layer product film curls significantly, so that it cannot easily be further processed. We hypothesize, without intending to be bound, that the selected nylon causes curling because of because of its high level crystallinity.

### Example 3: The following resins are coextruded to make a 7-layer source film having a total thickness of 78 µm.

| Layer | Content (Wt. Percent) | Thickness (µm) |
|---|---|---|
| 1 | PE: 65% PE FM1810+15% ELITE AT6900 +20% DLDPE 310E | 18 |
| 2 | PE: 65% CEFOR 1210P +15% ELITE AT6900 +20% DLDPE 310E | 18 |
| 3 | PE: 80%b Anteo FK1828 + 20% DLDPE 312E | 8 |
| 4 | Nylon: 100% Radilon CS38 | 8 |
| 5 | Tie: 80% PE FM1810 + 20% Admer NF642E | 6 |
| 6 | PE: 65% PE FM1810+15% ELITE AT6900 +20% DLDPE 310E | 11 |
| 7 | PE: 65% PE FM1810+15% ELITE AT6900 +20% DLDPE 310E | 9 |

The source film is separated between Layer 3 and Layer 4, to make:
- a 3-layer product film comprising layers 1, 2 and 3 that is 44 µm thick, and
- a 4-layer product film comprising layers 4, 5, 6 and 7 that is 34 µm thick.

The source film peels apart easily. The 4-layer product film is run on a pouching machine and makes pouches.

### Examples 4 and 5:

The polymers and polymer blends shown in Examples 4 and 5 below are coextruded as 7-layer source films shown in Examples 4 and 5 using blown film extrusion on a Collin extrusion line with a nine-layer, 500 mm diameter extrusion die. The temperature of polymer exiting each extruder is 225°C to 230°C. The resulting source films are rolled on a roller.
Each source film is peeled apart manually between layer 3 and Layer 4 to produce two separate product films, which are rewound. Each product film is tested for thickness, Elmendorf tear strength, dart impact strength, oxygen transmission and seal strength. The results are shown in Table 2:

### Example 4: The following resins are coextruded to make a 7-layer source film with a total thickness of 80 µm.

| Layer | Content (Wt. Percent) | Thickness (µm) |
|---|---|---|
| 1 | PE: 80% DOWLEX 2645G + 20% DLDPE 310E | 18 |
| 2 | PE: 80% DOWLEX 2645G + 20% DLDPE 310E | 16 |
| 3 | PE: 80% ELITE 5401GT + 20% DLDPE 312E | 4 |
| 4 | EVOH: 100% Eval F171B | 4 |
| 5 | Tie: 100% BYNEL 41E687 | 4 |
| 6 | PE: 80% DOWLEX 2645G + 20% DLDPE 310E | 16 |
| 7 | 80% ELITE 5401GT + 20% DLDPE 312E | 18 |

The source film is peeled apart between Layer 3 and Layer 4, to make:
- a 3-layer product film comprising layers 1, 2 and 3 that is 38 µm thick, and
- a 4-layer product film comprising layers 4, 5, 6 and 7 that is 42 µm thick.

It is observed that the product films peel apart easily and can be rewound separately for further use.

### Example 5: The following resins are coextruded to make a 7-layer source film with a total thickness of 180 µm.

| Layer | Content (Wt. Percent) | Thickness (µm) |
|---|---|---|
| 1 | PE: 80% DOWLEX 2645G + 20% DLDPE 310E | 40.5 |
| 2 | PE: 80% DOWLEX 2645G + 20% DLDPE 310E | 36 |
| 3 | PE: 80% ELITE 5401GT + 20% DLDPE 312E | 9 |
| 4 | EVOH: 100% Eval F171B | 9 |
| 5 | Tie: 100% BYNEL 41E687 | 9 |
| 6 | PE: 80% DOWLEX 2645G + 20% DLDPE 310E | 36 |
| 7 | 80% ELITE 5401GT + 20% DLDPE 312E | 40.5 |

The source film is separated between Layer 3 and Layer 4, to make:
- a 3-layer product film comprising layers 1, 2 and 3 that is 85.5 µm thick, and
- a 4-layer product film comprising layers 4, 5, 6 and 7 that is 94.5 µm thick.

It is observed that the films peel apart easily and can be rewound separately for further use.

### Comparative Example A: The polymers and polymer blends listed below are coextruded as described for Example 1 to make a 7-layer source film with a total thickness of 78 µm.

| Layer | Content (Wt. Percent) | Thickness (µm) |
|---|---|---|
| 1 | PE: 29% Anteo FK1828+30% Enable 2005ME+40% DLDPE 312E+1% PPA | 16 |
| 2 | PE: 60% CEFOR 1210P + 40% DLDPE 312E | 15.5 |
| 3 | Tie: 100% Admer NF498E | 5 |
| 4 | Nylon: 100% Ultramid C33 | 5 |
| 5 | Tie: 100% Admer NF498E | 5 |
| 6 | PE: 60% Enable 2005ME + 40% DLDPE 312E | 15.5 |
| 7 | PE: 79% ELITE 5401G + 20% DLDPE 312E + 1% PPA | 16 |

The source film cannot be peeled apart between Layer 3 and Layer 4 or other layers, so no product films can be made.

**Table 2**

| | Example 4 | | | Example 5 | | |
|---|---|---|---|---|---|---|
| | Source Film | 4-Layer Product Film (with EVOH) | 3-Layer Product Film (PE only) | Source Film | 4-Layer Product Film (with EVOH) | 3-Layer Product Film (PE only) |
| Thickness (µm) | 80 | 41 | 39 | 180 | 93 | 87 |
| Elmendorf Tear - TD (g) | 355 | 86.8 | 764.7 | 1546 | 668.2 | 1626 |
| Elmendorf Tear - MD (g) | 375 | - | 436.6 | 1434 | - | 1370 |
| Dart Impact (g) | 176 | 186 | 71.5 | 446 | 590 | 386 |
| Oxygen Transmission (cc/m²-day) | 0.66 | 0.73 | - | 0.23 | 0.2 | - |
| Seal Strength @ 115°C (N/15 mm) | | 8.9 | | | 15.1 | |
| Seal Strength @ 120°C (N/15 mm) | | 9.3 | | | 18.9 | |

## Claims

1. A process for making two polymer films from a single film, the process comprising:
(a) extruding polymers to form a source film comprising at least two layers, a first adhesion layer and a second adhesion layer, wherein the first adhesion layer and the second adhesion layer are in direct contact; and
(b) separating the source film at the interface between the first adhesion layer and the second adhesion layer to form a first product film and a second product film.

2. The process of any preceding claim, wherein the adhesion strength between the first adhesion layer and the second adhesion layer of the source film is no more than 2.0 N/15 mm when separating the source film during step (b).

3. The process of any preceding claim, wherein the adhesion strength between the first adhesion layer and the second adhesion layer of the source film is no more than 0.8 N/15 mm when separating the source film during step (b).

4. The process of any preceding claim, wherein the first adhesion layer comprises a polyethylene, and the second adhesion layer comprises a polypropylene homopolymer or random copolymer.

5. The process of any preceding claim, wherein the first adhesion layer comprises polyolefin, and the second adhesion layer comprises a polymer having dipolar moieties selected from the group of hydroxyl, halide, acid, ester, amine, or amide moieties.

6. The process of any preceding claim, wherein the first adhesion layer comprises a polyolefin, and the second adhesion layer comprises a non-polyolefin polymer selected from ethylene vinyl alcohol copolymer, polyamide or polycarbonate.

7. The process of any preceding claim, wherein at least one of the first or second adhesion layers is an internal layer of the source film, and the first product film and the second product film have a length of at least 25 meters in the machine direction.

8. The process of claim 7, wherein the internal layer is from 1 micron to 10 microns thick.

9. The process of claim 7, wherein the internal layer is adhered directly or indirectly to a supporting layer that is at least three times thicker than the internal layer.

10. The process of claim 7, wherein the first adhesion layer and the second adhesion layer are internal layers of the source film.

11. The process of claim 10, wherein the first adhesion layer or the second adhesion layer is from 1 micron to 10 microns thick.

12. The process of claim 10, wherein the first adhesion layer or the second adhesion layer is adhered directly or indirectly to a supporting layer that is at least three times thicker than the first or second adhesion layer.

13. The process of claim 7, wherein layers comprising polyolefins make up from 93 to 98 percent of the thickness of the source film and layers void of polyolefins make up from 2 to 7 percent of the thickness of the source film, based on the total thickness of the source film.

14. The process of claim 7, wherein the source film comprises two or more interfaces between the first adhesion layer and second adhesion layer and is separated into three or more product films.

15. The process of claim 1, wherein
(a) the source film is extruded as an extrusion coating on a substrate; and
(b) the first product film is separated from the second product film and the substrate; and
(c) the second product film is a coating on the substrate.
